Europäisches Patentamt

European Patent Office

Office européen des brevets

(11) Veröffentlichungsnummer: **0 475 124 A2**

(12) **EUROPÄISCHE PATENTANMELDUNG**

(21) Anmeldenummer: **91113822.0**

(22) Anmeldetag: **17.08.91**

(51) Int. Cl.5: **C08F 210/02**, //(C08F210/02, 218:08)

(30) Priorität: **28.08.90 DE 4027140**

(43) Veröffentlichungstag der Anmeldung: **18.03.92 Patentblatt 92/12**

(84) Benannte Vertragsstaaten: **BE DE ES FR GB NL**

(71) Anmelder: **BASF Aktiengesellschaft Carl-Bosch-Strasse 38 W-6700 Ludwigshafen(DE)**

(72) Erfinder: **Berger, Albin, Dr. Tiroler Strasse 39 W-6700 Ludwigshafen(DE)**
Erfinder: **Klimesch, Roger, Dr. Georg-Froeba-Strasse 43 W-6146 Alsbach-Haehnlein(DE)**
Erfinder: **Mueller, Michael Wolfgang, Dr. Neurott 56 W-6831 Plankstadt(DE)**
Erfinder: **Boehlke, Klaus, Dr. Gerhart-Hauptmann-Strasse 53 W-6717 Hessheim(DE)**
Erfinder: **Schwendemann, Volker, Dr. Am Haeuselberg 20 W-6730 Neustadt(DE)**
Erfinder: **Mietzner, Franz Georg, Dr. Neuhausener Weg 3 W-6700 Ludwigshafen(DE)**

(54) **Ethylen/Vinylacetat-Copolymerisate mit erhöhtem Erstarrungspunkt.**

(57) Copolymerisate aus
75 bis 92 Gew.-% Ethylen und
8 bis 25 Gew.-% Vinylacetat
mit einem Erstarrungspunkt von mehr als 87°C und einer Schmelzviskosität von mehr als 1200 Centistokes.

EP 0 475 124 A2

Die vorliegende Erfindung betrifft Copolymerisate aus

75 bis 92 Gew.-% Ethylen und

8 bis 25 Gew.-% Vinylacetat

mit einem Erstarrungspunkt von mehr als 87°C und einer Schmelzviskosität von mehr als 1200 Centistokes.

Außerdem betrifft die Erfindung ein Verfahren zum Herstellen derartiger Produkte.

Ethylen-Vinylacetat-Copolymerisate mit einem breiten Bereich an Vinylacetat-Gehalten werden für verschiedenste Anwendungszwecke eingesetzt.

Eine wichtige Eigenschaft für bestimmte Anwendungen ist der Erstarrungspunkt der Copolymerisate, der möglichst hoch liegen soll.

Im allgemeinen nimmt der Erstarrungspunkt mit steigendem Vinylacetat-Gehalt ab, weshalb eine Eigenschaftskombination von hohem Erstarrungspunkt bei hohem Vinylacetat-Gehalt bisland nicht zufriedenstellend erreicht werden konnte.

Aufgabe der vorliegenden Erfindung war es daher, Ethylen/Vinylacetat-Copolymerisatemit hohem Vinylacetat-Gehalt und hohem Erstarrungspunkt zur Verfügung zu stellen. Diese Aufgabe wird erfindungsgemäß durch die Ethylen/Vinylacetat-Copolymerisate gemäß Anspruch 1 gelöst.

Die erfindungsgemäßen Copolymerisate sind aufgebaut aus 75 bis 92, vorzugsweise 78 bis 90 und insbesondere 80 bis 90 Gew.-% Einheiten, die sich von Ethylen, und 8 bis 25, vorzugsweise 10 bis 22 und insbesondere 10 bis 20 Gew.-% Einheiten, die sich von Vinylacetat ableiten.

Daneben können noch weitere Monomere in Mengen bis zu 10 Gew.-% copolymerisiert werden, solange dadurch das Eigenschaftsspektrum der Produkte nicht verändert wird.

Das Molekulargewicht ($M_w$) der erfindungsgemäßen Copolymerisate liegt im allgemeinen im Bereich von 5000 bis 40000, vorzugsweise von 6000 bis 30000 und insbesondere von 7000 bis 25000.

Die Schmelzviskosität beträgt mehr als 1200 Centistokes (cst) und liegt im allgemeinen im Bereich von 1500 bis 4000, insbesondere von 1600 bis 3000 cst. Die Bestimmung der Schmelzviskosität erfolgt in einem UbbelohdeViskosimeter bei 120°C.

Die Dichte der Copolymerisate hängt unter anderem vom Gehalt an copolymerisiertem Vinylacetat ab und liegt im allgemeinen im Bereich von 0,918 bis 0,950 g/cm$^3$, vorzugsweise von 0,92 bis 0,945 g/cm$^3$.

Die Molekulargewichtsverteilung ist an sich nicht kritisch, doch haben sich Produkte mit einem Verhältnis $M_w/M_n$ im Bereich von 2,0 bis 4,5 insbesondere von 2,2 bis 3,5 und besonders bevorzugt von 2,2 bis 3,0 für manche Anwendungen als vorteilhaft erwiesen.

Der Erstarrungspunkt der erfindungsgemäßen Copolymerisate liegt bei mehr als 87°C, vorzugsweise im Bereich von 87,5 bis 105°C und insbesondere im Bereich von 88,5 bis 100°C. Die Bestimmung des Erstarrungspunkts erfolgt nach DGF M-III 4a (63).

Die Herstellung der erfindungsgemäßen Copolymerisate erfolgt nach dem erfindungsgemäßen Verfahren durch Hochdruckmassepolymerisation bei Drucken im Bereich von 1500 bis 3000, vorzugsweise von 1700 bis 2800 und insbesondere von 1800 bis 2400 bar.

Die Reaktionstemperatur liegt im Bereich von 180 bis 240, vorzugsweise von 190 bis 230 und insbesondere von 200 bis 225°C.

Die Verweilzeit im Reaktor liegt im allgemeinen im Bereich von 0,3 bis 5, vorzugsweise 0,8 bis 3,5 und insbesondere 1,0 bis 2,5 min.

Die Umsetzung kann in Gegenwart von Molekulargewichtsreglern wie Wasserstoff, Aldehyden (bevorzugt $C_1$-$C_4$-Aldehyde) oder Kohlenwasserstoffen (bevorzugt $C_3$-$C_8$) durchgeführt werden, um gezielt bestimmte Molekulargewichte einzustellen. Entsprechende Verfahren sind dem Fachmann bekannt.

Die Hochdruckmassepolymerisation ist bekanntlich eine radikalisch initiierte Polymerisation, d.h. die Reaktion wird in Anwesenheit von freie Radikale erzeugenden Initiatoren durchgeführt. Nur stellvertretend seien hier beispielhaft Diisopropylperoxodicarbonat, tert.-Butyl-perbenzoat, Di-3,5,5-trimethylhexanoylperoxid, tert.-Butylperisononanat und tert.-Butylperpivalat genannt, wovon die beiden letzten Initiatoren, auch in Mischung, bevorzugt werden. Die Art des Initiators ist jedoch im allgemeinen nicht sehr kritisch, weshalb auch andere Initiatoren geeignet sind, solange deren therm. Zerfallverhalten entsprechend ist.

Die Initiatormenge liegt im allgemeinen im Bereich von 1 bis 100, insbesondere 2 bis 80 und besonders bevorzugt von 2,5 bis 60 mol ppm, bezogen auf Ethylen (molare Menge an Initiator pro Mol Ethylen).

Das Verfahren kann in an sich bekannten Vorrichtungen für die Hochdruckmassepolymerisation wie Autoklaven und Hochdruckrohrreaktoren durchgeführt werden. Entsprechende Vorrichtungen sind dem Fachmann an sich bekannt und in der Literatur beschrieben. Nur stellvertretend sei hier auf eine allgemeine Darstellung in Erdöl und Kohle-Erdgas (Science & Technology, Bd. 42, Heft 4, S. 149 ff. (1989)) verwiesen.

Die Zuführung der Monomeren kann einzeln oder zusammen an einer oder an mehreren Stellen des Reaktors erfolgen.

In manchen Fällen hat sich eine Vorrichtung als vorteilhaft erwiesen, die aus einem Autoklavenreaktor und einem dahinter geschalteten Rohrreaktor aufgebaut ist, wie sie in der DE-A 23 22 553 beschrieben ist.

Die Aufarbeitung der erfindungsgemäßen Copolymerisate kann nach üblichen und dem Fachmann an sich bekannten Verfahren erfolgen, weshalb sich hier nähere Angaben erübrigen. Üblicherweise werden die Polymerisate nach Entspannung mit Hilfe einer Versprühung oder Pastelliereinrichtung als Pulver oder als Granulat ausgetragen.

Die erfindungsgemäßen Copolymerisate eignen sich aufgrund ihres Eigenschaftsspektrum insbesondere als Zusatzstoffe für Lacke aller Art, insbesondere sog. Metallic-Auto-Lacke und Holz- sowie Metallacke sowie zur Verwendung in sog. "Hot Melt", d.h. Schmelzklebstoffen.

Auch eine Verwendung als Hilfsmittel für die Verbesserung der Eigenschaften von flüssigen Kraft- und Brennstoffen ist möglich.

Beispiele

In einen 1 l Autoklaven wurden die in der Tabelle angegebenen Mengen an Ethylen und Vinylacetat zusammen mit der ebenfalls in der Tabelle angegebenen Menge Initiator eingeführt und unter den in der Tabelle angegebenen Bedingungen polymerisiert.

Nach der Umsetzung wurde in bekannter Weise entspannt und das Produkt mit Hilfe eines sogenannten Granulierbandes granuliert.

Der Erstarrungspunkt, der Schmelzpunkt, das $M_w/M_n$-Verhältnis und die Schmelzviskosität des Produkts sind ebenfalls der Tabelle zu entnehmen.

In der Tabelle werden folgende Abkürzungen verwendet

| | |
|---|---|
| E | = Ethylen |
| VAC | = Vinylacetat |
| EP | = Erstarrungspunkt |
| Smp | = Schmelzpunkt |
| TBPP | = tert.-Butylperpivalat |
| TBIN | = tert.-Butylperisononanat |

Tabelle

| Versuch Nr. | E [kg/h] | VAC [kg/h] | Temp. °C | Druck bar[1)] | Initiator mol ppm | EP °C | Smp. °C | Dichte g/cm³ | $M_w/M_n$ | Schmelz-viskosität cst |
|---|---|---|---|---|---|---|---|---|---|---|
| 1V | 18,5 | 3,26 | 245 | 1200 | 18,2 TBPP / 36,3 TBIN | 75,5 | 83,5 | 0,9237 | 2,916 | 1850 |
| 2V | 17,5 | 3,26 | 245 | 1700 | 16,0 TBPP / 32,0 TBIN | 79,5 | 85,9 | 0,9264 | 3,514 | 1875 |
| 3V | 11,0 | 2,39 | 245 | 1900 | 8,4 TBPP / 16,8 TBIN | 79,5 | 84,7 | 0,9269 | 3,769 | 3125 |
| 4 | 11,9 | 2,02 | 215 | 1900 | 3,5 TBPP | 89,5 | 97,7 | 0,9381 | 2,403 | 1880 |
| 5 | 11,6 | 1,75 | 200 | 1900 | 3,3 TBPP | 92,0 | - | 0,9421 | 2,530 | 1973 |
| 6 | 11,8 | 1,90 | 200 | 1900 | 2,6 TBPP | 89,5 | - | 0,9429 | 2,348 | 1972 |
| 7 | 9,6 | 1,43 | 215 | 2100 | 10,9 TBPP | 88,5 | 97,6 | 0,9369 | 2,654 | 1826 |
| 8 | 9,0 | 1,21 | 230 | 2100 | 49,8 TBPP | 91,0 | 97,9 | 0,9345 | 2,532 | 2104 |
| 9 | 8,8 | 1,35 | 230 | 2100 | 47,8 TBPP | 89,5 | - | 0,9335 | - | 2041 |
| 10 | 11,3 | 2,05 | 200 | 1900 | 29,7 TBPP | 89,0 | 97,7 | 0,9411 | - | 1936 |
| 11 | 8,5 | 1,13 | 200 | 2100 | 5,8 TBPP | 96,5 | - | 0,9425 | - | 2185 |

Die Vinylacetatgehalte im Copolymerisat waren wie folgt:

| Beispiel | VAC-Gehalt (Gew.-%) |
|----------|---------------------|
| 1V | 14,4 |
| 2V | 14,8 |
| 3V | 15,1 |
| 4 | 13,6 |
| 5 | 13,5 |
| 6 | 16,2 |
| 7 | 14,7 |
| 8 | 16,5 |
| 9 | 18,2 |
| 10 | 19,5 |
| 11 | 13,0 |

**Patentansprüche**

1. Copolymerisate aus

   75 bis 92 Gew.-% Ethylen und
   8 bis 25 Gew.-% Vinylacetat

   mit einem Erstarrungspunkt von mehr als 87°C und einer Schmelzviskosität von mehr als 1200 Centistokes.

2. Verfahren zur Herstellung von Copolymerisaten nach Anspruch 1 durch Hochdruckmassepolymerisation, dadurch gekennzeichnet, daß die Polymerisation bei einem Druck im Bereich von 1500 bis 3000 bar und einer Temperatur im Bereich von 180 bis 240°C durchgeführt wird.

3. Verfahren nach Anspruch 2, dadurch gekennzeichnet, daß die Polymerisation in einem Autoklaven oder in einem Autoklaven mit sich daran anschließendem Rohrreaktor durchgeführt wird.

4. Verfahren nach Anspruch 3, dadurch gekennzeichnet, daß die Gesamt-Verweilzeit im Bereich von 1,0 bis 2,5 min liegt.

5. Copolymerisate nach Anspruch 1, erhältlich durch Hochdruckmassepolymerisation bei Drucken im Bereich von 1500 bis 3000 bar und Temperaturen im Bereich von 180 bis 240°C.